# EUROPEAN PATENT APPLICATION

(11) **EP 1 733 806 A1**
(43) Date of publication of application: **20.12.2006**
(21) Application number: 04821887.9
(22) Date of filing: 16.11.2004
(51) Int. Cl.: B05D 7/24, C02F 1/48, C02F 1/68, C03C 17/25, C08J 7/06, C23C 26/00

(54) **INORGANIC FILM FORMING PROCESS AND SYSTEM**

(30) Priority: 02.04.2004 JP 2004109974
(71) Applicant: M'SKC, Ltd., Akishima-shi, Tokyo 1960003 (JP)
(72) Inventor: MOTOJIMA, Makoto, Tokai-shi, Aichi 4770032 (JP)
(74) Representative: Paget, Hugh Charles Edward
(86) International application number: PCT/JP2004/016983
(87) International publication number: WO 2005/099915

(57) **Abstract**

The present invention is an invention relating to the technique of forming an inorganic film which realizes an inorganic film excellent in durability and of the low cost, making the previous wax or polymer processing unnecessary. The apparatus of the present invention consists of a charged water producing tank 1, a magnetic field treating tank 2 and a film forming tank 3. The charged water producing tank 1 is provided with a raw water supplying port 11, a charged water b taking out port 12, and a ceramic particle-filled part 13 in which an infinite number of ceramic particles 14 containing at least silicon and aluminum as a dissolving out component are filled therein. The magnetic field treating tank 2 is provided with a charged water feeding port 21 and a magnetic field-treated water c taking out port 22, in which an S poll 23a and an N poll 23b for forming an electromagnetic field are arranged, and the tank has a passage water path 24 for passage of charged water b therebetween. The film forming tank 3 is provided with a magnetic field-treated water c feeding port 31 and a treated waste water d taking out port 32, and is provided with a nozzle 34 for spraying pressurized magnetic field-treated water c to a surface of a work 33 arranged in the tank.

## Description

### Technical field

The present invention relates to a method of forming an inorganic film which is applied to surfaces of iron, aluminum, a synthetic resin, a glass and a rubber used in automobiles, railroad vehicles, ships, aircrafts, and home electric appliances and coated surfaces thereof, and an apparatus therefor.

### Background art

Previously, a dust, a smut and a worm are easily adhered to surfaces of apparatuses used outdoors such as automobiles, railroad vehicles, ships and aircrafts, and it was always necessary to clean them. Although, surfaces of these apparatuses are usually covered or protected with surface films by wax or polymer processing, since those materials are organic products, it is pointed out that they become an environmental pollution source.

In addition, these protective films have a weak point that they easily undergo influence of weathering with ultraviolet-ray, and appearance and function are deteriorated such as fading of a coated film and deterioration in a luster and, further, since a protective film itself is soft, it is easily given a flaw, and protection of appearance is not sufficient. For this reason, it is necessary to frequently repeat wax or polymer processing, and there is also a problem that the material cost and the number of steps are required.

In order to deal with such problems, a procedure of forming a silica borate film by electrodeposition action with a charge generated by tourmaline has been proposed (see Patent Literature 1).
However, it still cannot be said that a protective film obtained by this method is sufficient in film durability. Patent Literature 1: Japanese Patent Application Laid-Open (JP-A) No. 2000-192086: "Claims" paragraph (0009), (0010)

### Disclosure of the invention

### Problems to be solved by the invention

The present invention was done in order to solve the aforementioned problems, and provides a method of forming an inorganic film excellent in durability and of low cost making the previous wax or polymer processing unnecessary, and can contribute to pollution suppression and environmental preservation, and an apparatus therefor. Further, the present invention provides a method of forming an inorganic film having cleaning function capable of oxidatively degrading and removing a polluting substance itself, and an apparatus therefor.

### Means to solve the problems

The aforementioned problems can be solved by a first invention of a method of forming an inorganic film, comprising contacting raw water with a ceramic particle containing at least silicon and aluminum as a dissolving out component to dissolve out the charged dissolving out component in this raw water with an exciting current to obtain charged water, and contacting this charged water with a work by spraying the charged water to a work surface or immersing a work in this charged water, thereby, forming an inorganic film containing oxide of the dissolving out component as a main component on a surface thereof.

And, in the aforementioned invention, it is preferable to use, as the ceramic particle, a ceramic particle containing one kind of ore selected from quartz porphyry, tourmaline and calcareons-oolite (Bakuhanseki), or a mixture of two or more kinds of ores of them, or a ceramic particle having a film containing one or two or more kinds of those ores as a film component. In addition, the invention is preferably embodied in an aspect that the charged water is passed in an electromagnetic field to generate an induced current and, thereafter, this is supplied for forming the film. And, this first invention can be embodied in an aspect that a ceramic particle containing, as a dissolving out component, titanium in addition to silicon and aluminum is used.

Also, the aforementioned problems can be solved by the next second invention of an apparatus for forming an inorganic film. That is, the aforementioned problems can be solved by an apparatus for forming an inorganic film for implementing the first invention of the method of forming an inorganic film, comprising a charged water producing tank provided with a raw water supplying port, wherein in an interior thereof, a ceramic particle containing one or two or more kinds of ores selected from quartz porphyry, tourmaline and calcareons-oolite which can contact with water to dissolve out at least silicon and aluminum on at least a surface part is filled so that raw water supplied from the raw water supplying port can be passed therethrough while contacting with the ceramic particle, and a charged water taking out port for taking out produced charged water, a magnetic field treating tank provided with a charged water feeding port for feeding the charged water and a magnetic field-treated water taking out port for taking out magnetic field-treated water, wherein in an interior thereof, an S pole and an N pole for forming an electromagnetic field are arranged, and a passage water path for passage of charged water, and a film forming tank provided with a means for contacting magnetic field-treated water with a surface of a work arranged in a tank.

This invention is also embodied in an aspect that a ceramic particle containing one or two or more kinds of ores selected from quartz porphyry, tourmaline and calcareons-oolite which can dissolve out titanium in addition to silicon and aluminum on at least a surface part is filled.

### Effect of the invention

The method of forming an inorganic film and the apparatus therefor of the present invention are constructed as explained above, and are based on the following characteristic principle. That is, (1) the inorganic film of the present invention is a SiO₂-Al₂O₃ system ore (stone) film in a first embodiment, and a SiO₂-Al₂O₃-TiO₂ system ore (stone) film in a second embodiment, (2) has a character of an ultra thin-type plating at a nanometer level, and (3) is an electrochemical reaction plating which is implemented by a particular means.

The thus obtained inorganic film, in the case of the SiO₂-Al₂O₃ system film (first embodiment), has the excellent effect that it realizes the low cost and excellent durability, makes the previous wax or polymer processing unnecessary, and can contribute to pollution suppression and environmental preservation. Further, in the case of SiO₂-Al₂O₃-TiO₂ system film (second embodiment), since the organic film can degrade and remove a polluting substance itself, it has the effect that it is particularly suitable for suppression of pollution of an organic system. Therefore, the present invention has the extremely great practical value as a method of forming an inorganic film and an apparatus therefor which have solved the previous problems.

### Brief description of the drawings

[Fig.1] A schematic block view of a main apparatus for explaining the present invention.
[Fig.2] A graph showing a relationship between a spraying pressure and a film thickness in the present invention.
[Fig.3] A graph showing a relationship between a treating time and a film thickness in the present invention.
[Fig.4] A graph showing a reflectivity of a treated surface in the present invention.
[Fig.5] A graph showing a friction coefficient of a treating surface in the present invention.
[Fig.6] A graph showing a surface hardness of a treated surface in the present invention.
[Fig.7] A graph showing results of photoelectron analysis (ESCA) of a treated surface in the present invention.
[Fig.8] A graph showing pollution degradability of a second embodiment

### Explanation of symbols

- 1.: Charged water producing tank
- 11: Raw water supplying port
- 12: Charged water taking out port
- 13: Ceramic particle-filled part
- 14: Ceramic particle
- 2: Magnetic field treating tank
- 21: Charged water feeding port
- 22: Magnetic field-treated water taking out port
- 23a: S pole
- 23b: N pole
- 24: Passage water path
- 3: Film forming tank
- 31: Magnetic field-treated feeding port
- 32: Treated waste water taking out port
- 33: Work
- 34: Nozzle
- a: Raw water
- b: Charged water
- c: Magnetic field-treated water
- d: Treated waste water

### Best mode for carrying out the invention

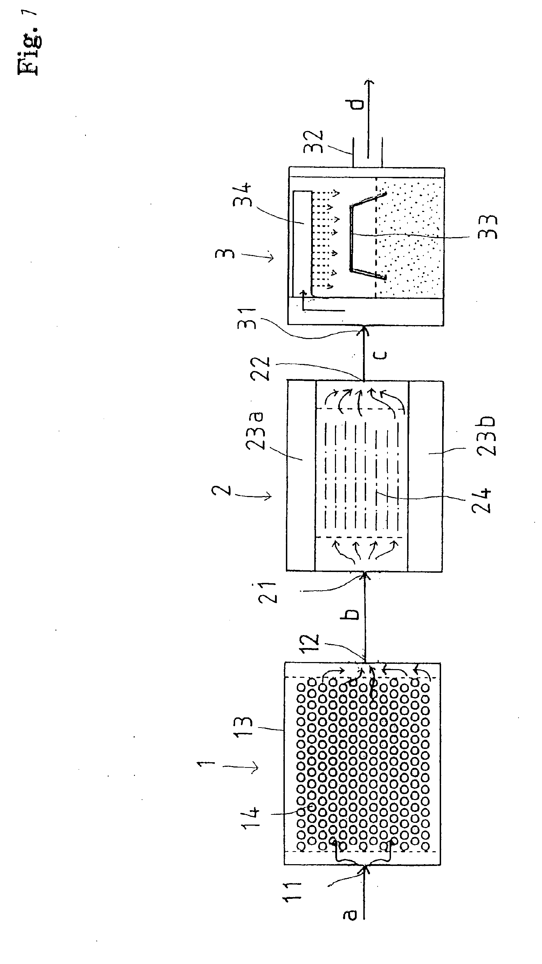

Then, an embodiment of the method of forming an inorganic film and the apparatus therefor of the present invention will be explained referring to Figs. 1 to 8.

### (First embodiment)

The first embodiment of the method of forming an inorganic film of the present invention together with the apparatus for forming the inorganic film is explained, and the apparatus of the present invention is constructed of at least a charged water producing tank 1, a magnetic field treating tank 2, and a film forming tank 3 as exemplified in Fig.1.

This charged water producing tank 1 is provided with a raw water supplying port 11 for introducing raw water a such as tap water and well water, and a charged water taking out port 12 for taking out charged water b after treatment, and is constructed of a ceramic particle-filled part 13 in which, in an interior thereof, an infinite number of ceramic particles 14 containing at least silicon and aluminum as a dissolving out component are filled so that they are contacted with water to dissolve out at least silicon and aluminum.

This ceramic particle 14 is suitably a generally spherical particle of a particle diameter of 3 to 10mm consisting of a SiO₂-Al₂O₃ system ceramic and, in order to enhance an efficiency of producing charged water described later, a ceramic particle containing one kind of ore selected from quartz porphyry, tourmaline and calcareons-oolite containing at least silicon and aluminum, or a mixture of two or more kinds of ores of them at 50% or more is preferable, and a ceramic particle having a film containing one or two or more kinds of aforementioned ores containing at least silicon and aluminum at 50% or more as a film component is more preferable.

And, these ceramic particles are filled in a ceramic particle-filled part 13 in the state where raw water a fed through a raw water supplying port 11 can pass therethrough while contacting with the ceramic particle 14. For example, since it is preferable that a ceramic particle 14 is flown and stirred by a water stream of raw water a, thereby, a ceramic particle 14 and raw water a are contacted well, it is better that a ceramic particle 14 is flowably filled.

In this charged water producing tank 1, when raw water a is contacted with the ceramic particle 14, electricity is instantaneously discharged in water, and a dissolving out component of at least silicon and aluminum is dissolved out in the charged state together with an exciting current from a ceramic particle 14, thereby, activated charged water b is obtained. This exciting current is semi-eternally obtained from the ceramic particle 14, and becomes a main starting force for forming an inorganic film of the present invention.

Next, a magnetic field treating tank 2 is provided with a charged water feeding port 21 for feeding charged water b obtained in the charged water producing tank 1 and a magnetic field-treated water taking out port 22 for taking out magnetic field-treated water c, and is constructed such that, in an interior thereof, an S pole 23a and an N pole 23b for forming an electromagnetic field are arranged, and a passage water path 24 for passage of charged water b is provided therebetween.

In this magnetic field treating tank 2, since the charged water b having a charge is passed in an electromagnetic field formed by an S pole 23a and an N pole 23b, a predetermined induced current is generated by a Faraday rule, and charged water b is taken out as more activated magnetic field-treated water c. For this magnetic field treatment, an intensity of this electromagnetic field is set at preferably 0.10 to 0.80mG, more preferably 0.30 to 0.80mG.

In the method of forming an inorganic film of the present invention, although a certain extent of an inorganic film is obtained even when this magnetic field treatment is not performed, preferable results are obtained in particularly stability of film formation, and durability of a formed film when magnetic field treatment is performed. Therefore, in the present invention, it is a preferable method when this magnetic field treatment is performed.

Next, a film forming tank 3 in the present invention is provided with a magnetic field-treated water feeding port 31 for feeding magnetic field-treated water c obtained in the magnetic field treating tank 2, and a treated waste water taking out port 32 for taking out treated waste water d, and is provided with a nozzle 34 for spraying pressurized magnetic field-treated water c to a surface of a work 33 in the case of Fig.1, as a means for contacting a surface of a work 33 arranged in the tank with magnetic field-treated water c.

In this film forming tank 3, by contacting a surface of a work 33 with magnetic field-treated water c, a dissolving out component of at least silicon and aluminum in magnetic field-treated water c forms an inorganic film on a surface of a work 33 by an electrochemical reaction according to cathode reduction precipitation. As a result of photoelectron analysis (ESCA) , it has been found out that this inorganic film is a SiO₂-Al₂O₃ system glassy film containing, as a main component, oxides of dissolving out components of silicon and aluminum, in which respective oxides are bound.

Although a method of immersing a work 33 in magnetic field-treated water c is of course possible for such film formation, it is preferable to spray pressurized magnetic field-treated water c to a whole surface of a work 33 using a spraying nozzle as exemplified in Fig.1. The reason is that when the water is sprayed through a nozzle 34 to impart impact, an impact current is generated, improving an efficiency of film formation.

In the present invention, it is preferable to retain a sum of the aforementioned exciting current, induced current and impact current at 0.05 to 0.07mA. The reason is that an inorganic film excellent in durability described later is assuredly formed.

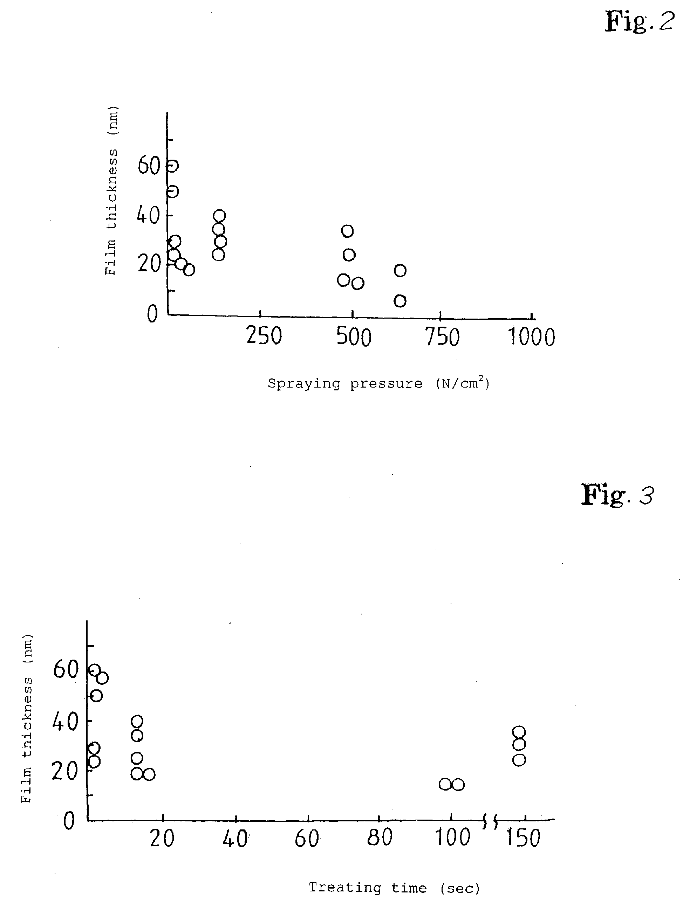

In addition, a relationship between the spraying pressure and a thickness of the resulting film in the present invention is as exemplified in Fig.2, and it was found out that a film thickness is stably obtained in a range of 10 to 60mm at a pressure range of 10 to 500N/cm² (a symbol o in the figure shows results by varying the condition. The same hereinafter).

In addition, a relationship between a treating time in a film forming tank 3 and a thickness of the resulting film in the present invention is as exemplified in Fig.3 and, even at around instantaneous one second, a film of a thickness of 10 to 100nm is obtained, but in order to obtain a stable film of 10 to 60nm, 10 seconds or longer is preferable, and 60 seconds or longer is not economical, being unnecessary. In addition, upon supply of the charged water to the film formation, it is preferable that a temperature of a treating solution in a film forming tank 3 in the present invention is retained at 30 to 50°C. The reason is that, at a temperature in this range, an electrochemical reaction is promoted, and a film is formed in the aforementioned short time.

The present invention can be applied to many kinds of members such as iron, aluminum, a synthetic resin, a glass and a rubber used as a constitutional member of automobiles, railroad vehicles, ships, aircrafts and home electric appliances. And, as the surface condition of these works, a material exposed surface and a coated surface of a resin coating may be applied without any disorder, and it is preferable that the present invention is applied to a coated surface from a viewpoint of protection of a member surface.

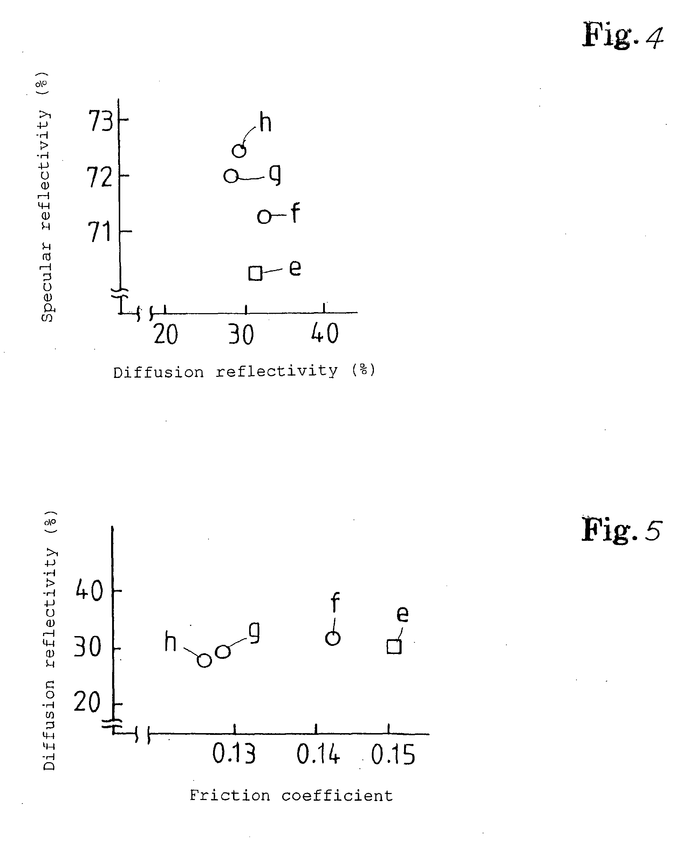

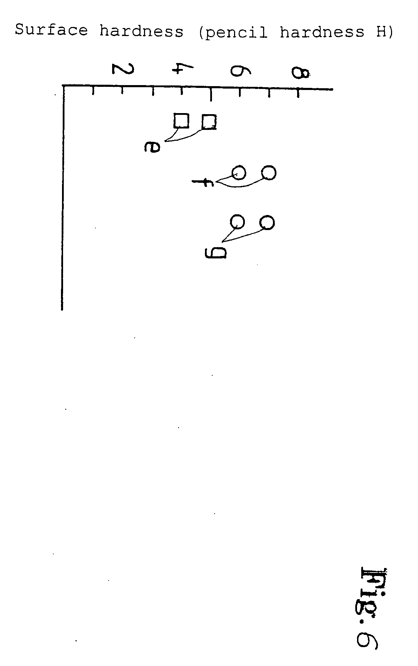

Then, some advantages of an inorganic film obtained by the present invention will be explained by Figs. 4 to 6.
First, Fig. 4 is a graph comparing a specular reflectivity which is an index showing surface roughening, fading or luster deterioration of a coated surface, between a first time treated surface f, a second time treated surface g, a fifth time treated surface h, and a wax-treated surface e (hereinafter, the same in Figs. 5 and 6) and, by this, it is seen that the effect of protecting a coated surface of a ground by the film of the present invention is great.

Fig. 5 is a graph comparing a friction coefficient (kinetic friction) which is an index of difficulty in adhesion of a smut or a polluting substance on a coated surface and easiness of cleaning between the present invention treated surfaces and the wax-treated surface as in Fig. 4 and, by this, it is seen that difficulty in adhesion of a smut and easiness of cleaning by the film of the present invention are remarkably excellent.

Further, Fig. 6 shows results of comparison of a pencil hardness as a surface hardness which is an index of durability of a coated surface between the same treated surfaces as those described above and, also in this point, a remarkable difference is recognized, and it is understood that the present invention is also excellent in durability.

The inorganic film obtained by the first embodiment of the present invention exerts excellent performance as compared with wax or similar polymer processing as explained above and, moreover, as described above, the method of forming an inorganic film and the apparatus therefor of the present invention necessitate little consumables and, since necessary operating power is slight, the operating cost of the apparatus is extremely small, and maintenance is easy, they are particularly excellent in economy.

### (Second embodiment)

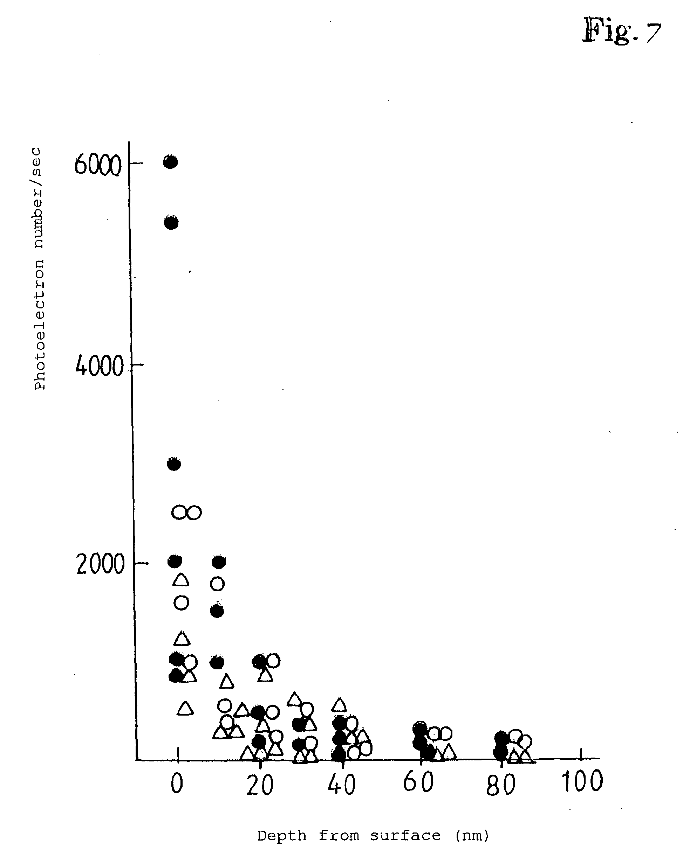

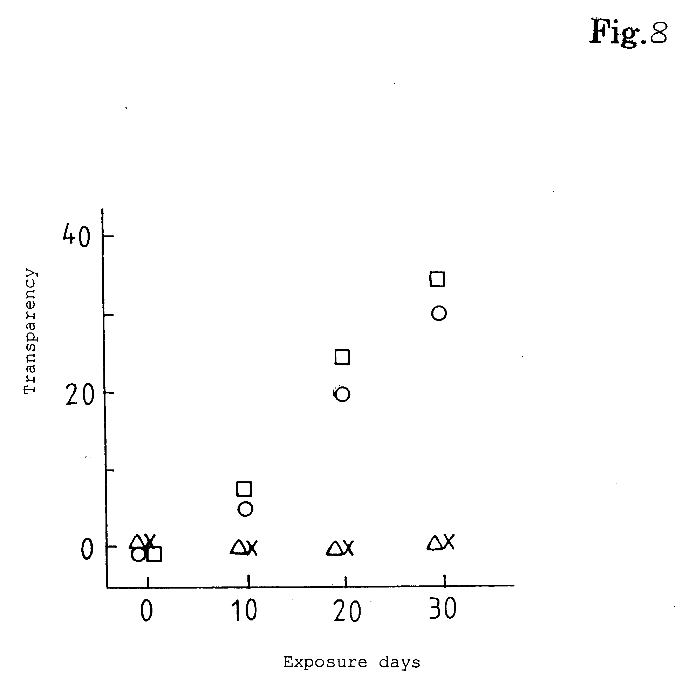

Then, a second embodiment of the method of forming an inorganic film of the present invention will be explained by supplementing Figs. 7 and 8. The second embodiments is the same as the first embodiment in that a forming apparatus constructed of a charged water producing tank 1, a magnetic field treating tank 2 and a film forming tank 3 as exemplified in Fig. 1 is used. A difference is in that an infinite number of ceramic particles 14 containing silicon, aluminum and titanium as a dissolving out component are filled into a ceramic particle-filled part 13 of a charged water producing tank 1 so that at least silicon, aluminum and titanium are dissolved out upon contact with water.

A ceramic particle 14 of this second embodiment is composed of a SiO₂-Al₂O₃-TiO₂ system ceramic, a ceramic particle containing one kind of ore selected from quartz porphyry, tourmaline and calcareons-oolite containing silicon, aluminum and titanium, or a mixture of two or more kinds of ores of them at 50 % or more is more preferable, and a ceramic particle having a film containing one or two or more kinds of aforementioned ores as a film component at 50 % or more is more preferable. And, as the ore, an ore containing 0.20 to 3.0 % of titanium in terms of titanium oxide can be preferably utilized.

Also in this second embodiment, the filled state of a ceramic particle in a charged water producing tank 1, and behaviors of raw water a and a ceramic particle 14 are the same as those of the previous case, and a dissolving out component of at least silicon, aluminum and titanium is dissolved out from a ceramic particle 14 in the charged state, thereby, activated charged water b is obtained.

Then, by a magnetic field treating tank 2 having the same construction and function as those explained above, charged water b is taken out as more activated magnetic field-treated water c. A preferable magnetic field intensity is as described above.
In addition, in the method of forming an inorganic film of a second embodiment, even when this magnetic field treatment is not performed, a certain extent of an inorganic film is obtained, but it is preferable to perform magnetic field treatment, as in the previous case.

Then, a film is formed in a film forming tank 3, and an instrument construction and operation therein are the same as those of the previous first embodiment. In the second embodiment, a dissolving out component of silicon, aluminum and titanium in magnetic field-treated water c forms an inorganic film on a surface of a work 33 by an electrochemical reaction according to cathode reduction precipitation.

In addition, as shown in Fig. 7, as a result of photoelectron analysis (ESCA), it has been found out that this inorganic film contains, as a main component, oxides of dissolving out components of silicon, aluminum and titanium, and a SiO₂-Al₂O₃-TiO₂ system glassy film in which respective oxides are bound is formed as a film layer at an NM level having the greatest depth of about 80 nm. In Fig. 7, o indicates Si, and Δ indicates photoelectron number/sec based on Ti (for a reference, the case of the first embodiment is indicated by •).

Further, also in the second embodiment, it is preferable to spray pressurized magnetic field-treated water c to a whole surface of a work 33 using a spraying nozzle exemplified in Fig. 1. In addition, it is preferable also from a viewpoint of the oxidative degradation mechanism described later, to retain a sum of an exciting current, and induced current, and an impact current at 0.05 to 0.07 mA.

In addition, like the first embodiment, this second embodiment can be also applied to many kinds of members such as iron, aluminum, a synthetic resin, a glass and a rubber used as a constitutional member of automobiles, railroad vehicles, ships, aircrafts and home electric appliances. And, functions of a film exemplified in Figs. 4, 5 and 6 are similarly exerted and, moreover, as shown in Fig. 8, a film (symbol o in the figure) of the second embodiment has the special characteristic that it has the cleaning function of degrading and removing an organic polluting substance exemplified as China ink during outdoor exposure.

In addition, a graph of Fig. 8 represents the situation where a film of the present invention is formed on a white glass plate, a China ink solution is coated thereon as a polluting substance, this is exposed outdoors, and fading is seen, by transparency (completely transparent = 100, opaque = 0), and o indicates the second embodiment of the present invention, Δ indicates the first embodiment, □ indicates the case where a titanium oxide optical catalyst is coated, and X indicates the case of non-treatment. By this, it was seen that the film of the second embodiment has degradation property comparable to that of a titanium oxide optical catalyst.

## Claims

1. A method of forming an inorganic film, comprising contacting raw water with a ceramic particle containing at least silicon and aluminum as a dissolving out component to dissolve out the charged dissolving out component in this raw water with an exciting current to obtain charged water, and contacting this charged water with a work by spraying the charged water to a work surface or immersing a work in this charged water, thereby, forming an inorganic film containing oxide of the dissolving out component as a main component on a surface thereof.

2. The method of forming an inorganic film according to claim 1, wherein as the ceramic particle, a ceramic particle containing one kind of ore selected from quartz porphyry, tourmaline and calcareons-oolite, or a mixture of two or more kinds of ores of them, or a ceramic particle having a film containing one or two or more kinds of those ores as a film component is used.

3. The method of forming an inorganic film according to claim 1 or 2, wherein the charged water is passed in an electromagnetic field to generate an induced current, and is supplied to the film formation.

4. The method of forming an inorganic film according to claim 3, wherein upon supply of the charged water to the film formation, the charged water is sprayed through a nozzle by adjusting a pressure at 10 to 500 N/cm², thereby, impact is imparted, and an impact current is generated.

5. The method of forming an inorganic film according to any one of claims 1 to 4, wherein upon supply of the charged water to the film formation, a solution temperature is retained at 10 to 50°C.

6. The method of forming an inorganic film according to any one of claims 1 to 5, wherein a time for contacting the charged water with a work is 1 to 60 seconds, and a thickness of an inorganic film to be formed is 10 to 100 nm.

7. The method of forming an inorganic film according to any one of claims 1 to 6, wherein a ceramic particle containing titanium as a dissolving out component in addition to the silicon and aluminum is used.

8. An apparatus for forming an inorganic film for implementing the method of forming an inorganic film as defined in any one of claims 1 to 6, comprising a charged water producing tank provided with a raw water supplying port, wherein in an interior thereof, a ceramic particle containing one or two or more kinds of ores selected from quartz porphyry, tourmaline and calcareons-oolite which can contact with water to dissolve out at least silicon and aluminum on at least a surface part is filled so that raw water supplied from the raw water supplying port can be passed therethrough while contacting with the ceramic particle, and a charged water taking out port for taking out produced charged water, a magnetic field treating tank provided with a charged water feeding port for feeding the charged water and a magnetic field-treated taking out port for taking out magnetic field-treated water, wherein in an interior thereof, an S pole and an N pole for forming an electromagnetic field are arranged, and a passage water path for passage of charged water, and a film forming tank provided with a means for contacting magnetic field-treated water with a surface of a work arranged in a tank.

9. The apparatus for forming an inorganic film according to claim 7, which is provided with a nozzle for spraying magnetic field-treated water to a surface of a work arranged in the film forming tank.

10. The apparatus for forming an inorganic film according to claim 8 or 9, wherein a ceramic particle containing one or two or more kinds of ores selected from quartz porphyry, tourmaline and calcareons-oolite which can dissolve out titanium in addition to silicon and aluminum on at least a surface part is filled.
